(19) Europäisches Patentamt
European Patent Office
Office européen des brevets

(11) Veröffentlichungsnummer: **0 009 716**
**B1**

(12) # EUROPÄISCHE PATENTSCHRIFT

(45) Veröffentlichungstag der Patentschrift: **12.05.82**

(51) Int. Cl.³: **A 01 N 47/30** // (A01N47/30, 33/18)

(21) Anmeldenummer: **79103519.9**

(22) Anmeldetag: **19.09.79**

(54) **Herbizide Mittel und deren Verwendung im Pflanzenschutz.**

(30) Priorität: **28.09.78 DE 2842142**

(43) Veröffentlichungstag der Anmeldung: **16.04.80 Patentblatt 80/8**

(45) Bekanntmachung des Hinweises auf die Patenterteilung: **12.05.82 Patentblatt 82/19**

(84) Benannte Vertragsstaaten: **AT BE CH DE FR GB IT NL SE**

(56) Entgegenhaltungen:
**CH-A-505 552**
**DE-A-2 039 041**
**GB-A-1 348 428**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt/Main 80 (DE)**

(72) Erfinder: **Schumacher, Hans, Dr., Claudiusstrasse 4, D-6093 Flörsheim am Main (DE)**
Erfinder: **Albrecht, Konrad, Dr., Sodener Strasse 64, D-6233 Kelkheim (Taunus) (DE)**
Erfinder: **Langelüddeke, Peter, Dr., Nelkenweg 5, D-6238 Hofheim am Taunus (DE)**

**EP 0 009 716 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Herbizide Mittel und deren Verwendung im Pflanzenschutz

Gegenstand der vorliegenden Erfindung sind herbizide Mittel, die gekennzeichnet sind durch einen Gehalt an 2,6-Dinitro-N,N-dipropyl-4-trifluormethylanilin (common name: Trifluralin) der Formel

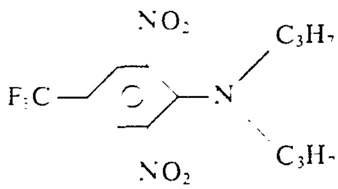

(A) Trifluralin

in Kombination mit 3-(4-Isopropylphenyl)-1,1-dimethylharnstoff (common name: Isoproturon) der Formel

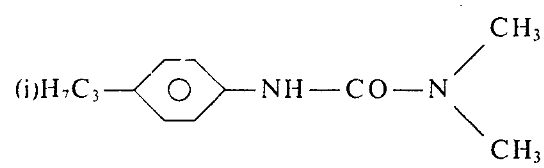

(B) Isoproturon

Beide Wirkstoffe sind bekannt, z. B. aus H. Martin und C. R. Worthing »Pesticide Manual«, 5. Aufl., 1977, British Crop Protection Council, Seiten 528 bzw. 317.

Die Anwendung der beiden Verbindungen in Getreide ist ebenfalls bekannt, z. B. aus A. J. Kovacs und C. Mallegni: Proc. 10th British Weed Control Conf., 1970, Seiten 56–62, und J. Rognon, A. Thizy und D. Pillon: 23em Symp. de Phytopharmacie Gent 1972, Seiten 663–669.

Aus der GB-PS 1 348 428 ist bekannt, daß Trifluralin u. a. mit Harnstoffherbiziden zur Unkrautbekämpfung in verschiedenen Pflanzenkulturen kombiniert werden kann. Die beschriebenen Kombinationen zeigen jedoch bei Anwendung in Getreide keine Selektivität.

In der DE-OS 2 039 041 ist beschrieben, daß Isoproturon mit zahlreichen anderen Herbiziden und Bodeninsektiziden kombiniert werden kann, u. a. auch mit Trifluralin. Es werden jedoch keinerlei Angaben über die Wirkung solcher Kombinationen gemacht.

Es wurde nun gefunden, daß Kombinationen der Komponenten A und B sich durch eine synergistische Wirksamkeit bei der Unkrautbekämpfung in Kulturpflanzen, insbesondere in Weizen, Gerste und Roggen, auszeichnen. Diese Wirkung ist überraschend und war aufgrund der Vorveröffentlichungen nicht vorhersehbar.

Die Komponenten A und B lassen sich innerhalb weiter Grenzen miteinander kombinieren. Bevorzugt sind jedoch Mischungsverhältnisse (A : B) von 10 : 1 bis 1 : 10, insbesondere 4 : 1 bis 1 : 4.

Mit Hilfe der erfindungsgemäßen Mittel lassen sich zahlreiche Unkräuter in Nutzpflanzenkulturen, insbesondere in Getreidearten wie Weizen, Gerste und Roggen, erfolgreich bekämpfen. Beispielsweise seien folgende Arten genannt:

| | |
|---|---|
| Gramineae | Alopecurus myosuroides |
| | Avena fatua |
| | Poa annua |
| | Poa trivialis |
| | Lolium multiflorum |
| Compositae | Matricaria inodora |
| | Matricaria chamomilla |
| | Anthemis arvensis |
| Papaveraceae | Papaver rhoeas |
| Cruciferae | Capsella bursa-pastoris |
| | Sinapis arvensis |
| Rubiaceae | Galium aparine |
| Scrophulariaceae | Veronica arvensis |
| | Veronica hederifolia |
| Labiatae | Lamium purpureum |
| Caryophyllaceae | Stellaria media |
| Polygonaceae | Polygonum persicaria |
| | Polygonum aviculare |

Die erfindungsgemäßen Wirkstoffkombinationen können entweder als Tankmischungen, bei denen die Wirkstoffkomponenten erst unmittelbar vor der Applikation miteinander vermischt werden, oder als Fertigformulierungen zur Anwendung gebracht werde. Als Fertigformulierungen können sie

insbesondere in Form von benetzbaren Pulvern (Spritzpulver), aber auch in Form von emulgierbaren Konzentraten oder Granulaten formuliert werden und enthalten dann außer der Wirkstoffkombination noch die üblichen Formulierungshilfsmittel, wie z. B. Netz-, Haft-, Dispergiermittel, feste oder flüssige Inertstoffe, Mahlhilfsmittel, Lösungsmittel und Emulgatoren.

Spritzpulver der erfindungsgemäßen Wirkstoffkombinationen können z. B. hergestellt werden, indem man die Verbindung A (Trifluralin) zunächst bei 80°C in einer Wärmekammer zum Schmelzen bringt und den warmen, geschmolzenen Wirkstoff in einem schnellaufenden Mischer (Typ Lödige-Mischer) auf beispielsweise feindisperse, synthetische Kieselsäure oder ein anderes saugfähiges inertes Pulver, wie z. B. Diatomeenerde, Clay, Bentonite unter Mischen aufdüst und adsorbiert, wobei ein lockeres, trockenes Pulver entstehen muß. Zur Erzielung einer in bezug auf den Wirkstoff möglichst hochprozentigen Formulierung setzt man hier vorteilhaft synthetische Kieselsäure ein (z. B. Wessalon S der Fa. Degussa, Deutschland oder Neosyl der Fa. Crosfield Chemicals, England).

Parallel hierzu stellt man aus der Verbindung B (Isoproturon) ein Pulverkonzentrat durch Mischen und Vermahlen mit üblichen Formulierungs- und Mahlhilfsmitteln z. B. auf einer schnellaufenden Hochleistungsmühle wie Stiftmühlen, Gebläsemühlen oder Luftstrahlmühlen her, das vorzugsweise eine Feinheit von 325 mesh besitzt. Das bedeutet, daß das Pulver bei Siebung auf einem 44 Mikron-Sieb bis auf tolerierbare 1 Gew.-% feiner als 44 Mikron sein muß. Zweckmäßigerweise mischt man dem Pulverkonzentrat vor der Mahlung bereits die erforderlichen Dispergier- und Netzmittel, Entschäumer und Inertmaterialien zu.

Als Dispergiermittel eignen sich z. B. dinaphthylmethandisulfonsaures Natrium, Ligninsulfonate, Kondensationsprodukte von Alkylnaphthalinsulfonsäuren mit Kresolen, Natriumsulfit und Formaldehyd (Dispergiermittel SS, Hoechst AG), Oleoyl-N-methyltauride, Polyvinylalkohole, Polyvinylpyrrolidone, als Netzmittel z. B. Alkylnaphthalinsulfonate, Alkylsulfobernsteinsäureester, Alkylbenzolsulfonate, Alkylsufate. Als Entschäumer eignen sich, wenn überhaupt erforderlich, z. B. Natrium- oder Kaliumsalze von Fettsäuren und Silicone.

Die so getrennt hergestellten Trifluralin- und Isoproturon-Pulverkonzentrate mischt man sodann entsprechend den gewünschten Wirkstoffverhältnissen. Anschließend mahlt man diese Trifluralin-Isoproturon-Spritzpulver nochmals mit einer einfachen Schlagkreuzmühle oder Hochleistungsmühle bei reduzierter Umdrehungsgeschwindigkeit des Mahlrotors.

Die erhaltenen benetzbaren Pulver sind in Wasser gleichmäßig dispergierbare Präparate, die neben dem Wirkstoffanteil und außer einem Verdünnungs- oder Inertstoff noch Netzmittel, z. B. polyoxäthylierte Alkylphenole, polyoxäthylierte Oleyl- oder Stearylamine, Alkyl- oder Alkylphenylsulfonate sowie Dispergiermittel z. B. ligninsulfonsaures Natrium, 2,2'-dinaphthylmethan-6-6'-disulfonsaures Natrium, dibutylnaphthalinsulfonsaures Natrium oder auch oleoylmethyltaurinsaures Natrium, ferner gegebenenfalls Haftmittel, wie z. B. Polyvinylalkohole sowie Mahlhilfsmittel enthalten können.

Emulgierbare Konzentrate können durch Auflösen des Wirkstoffes in einem organischen Lösungsmittel, z. B. Butanol, Cyclohexanon, Dimethylformamid, Xylol oder auch höhersiedenden Aromaten und Zusatz z. B. eines nichtionischen Emulgier- und Netzmittels, beispielsweise eines polyoxäthylierten Alkylphenols oder eines polyoxäthylierten Oleyl- oder Stearylamins, erhalten werden.

Stäubemittel können durch Vermahlen des Wirkstoffes mit fein verteilten, festen Stoffen, z. B. Talkum, natürlichen Tonen, wie Kaolin, Bentonit, Pyrophillit oder Diatomeenerde erhalten werden.

Granulate können entweder durch Verdüsen des Wirkstoffes auf adsorptionsfähiges, granuliertes Inertmaterial hergestellt werden, oder durch Aufbringen von Wirkstoffkonzentraten mittels Klebemitteln, z. B. Polyvinylalkohol, polyacrylsaures Natrium oder auch Mineralölen auf die Oberfläche von Trägerstoffen, wie z. B. Sand, Kaolinite, oder von granuliertem Inertmaterial. Auch können geeignete Granulate in der für die Herstellung von Düngemittelgranalien üblichen Weise — gewünschtenfalls auch in Mischung mit Düngemitteln — hergestellt werden.

Bei kombinierten herbiziden Mitteln können die Konzentrationen der Wirkstoffe in den handelsüblichen Formulierungen verschieden sein. In benetzbaren Pulvern kann die Wirkstoffkonzentration z. B. zwischen etwa 10 und 80 Gew.-% variieren, wobei der Rest zu 100 Gew.-% aus den oben angegebenen Formulierungszusätzen besteht. Bei emulgierbaren Konzentraten beträgt die Wirkstoffkonzentration z. B. etwa 10 bis 70 Gew.-%. Staubförmige Formulierungen enthalten meist z. B. etwa 5 bis 20 Gew.-% an Wirkstoff, versprühbare Lösungen z. B. etwa 0,05 bis 20 Gew.-% Wirkstoff. Bei Granulaten hängt der Wirkstoffgehalt z. T. davon ab, ob die wirksame Verbindung flüssig oder fest vorliegt und welche Granulierhilfsmittel, Füllstoffe usw. verwendet werden. Er kann im allgemeinen z. B. etwa 10 bis 80 Gew.-% betragen.

Zur Anwendung werden die handelsüblichen Konzentrate gegebenenfalls in üblicher Weise verdünnt, z. B. bei benetzbaren Pulvern und emulgierbaren Konzentraten mittels Wasser. Granulierte Zubereitungen werden vor der Anwendung im allgemeinen nicht mehr mit weiteren inerten Stoffen verdünnt. Mit den äußeren Bedingungen wie z. B. Temperatur, Feuchtigkeit u. a. variiert die erforderliche Wirkstoff-Aufwandmenge. Sie kann innerhalb weiter Grenzen schwanken, z. B. zwischen 0,1 und 10,0 kg/ha Aktivsubstanz, vorzugsweise liegt sie jedoch zwischen 0,5 und 5 kg/ha.

## Formulierungsbeispiele

### Beispiel 1

Herstellung eines Trifluralin-Isoproturon-Spritzpulvers

a) Trifluralin-Konzentrat

200 kg Trifluralin techn. (95% Reinheit) werden in einer Wärmekammer bei 80°C zum Schmelzen gebracht und in einem 3-$m^3$-Schnellmischer (Typ Lödige) mittels eines Verteilerrechens bei laufendem Mischer auf 340 kg feindisperse synthetische Kieselsäure (Wessalon S) gesprüht. Anschließend mischt man 15 Minuten nach. Man erhält ein feinpulvriges Adsorbat.

b) Isoproturon-Konzentrat

Man mischt

| | | |
|---|---|---|
| 202,50 | kg | Isoproturon techn. (99% Reinheit) |
| 67,00 | kg | feindisperse synthetische Kieselsäure (Wessalon S) |
| 113,50 | kg | Kondensationsprodukt aus Alkylnaphthalinsulfonsäure mit Kresolen, Natriumsulfit und Formaldehyd (Dispergiermittel SS, Hoechst AG) |
| 52,10 | kg | alkylnaphthalinsulfonsaures Natrium (®Leonil DB) |
| 1,40 | kg | Seifenflocken |
| 13,50 | kg | Natriumcarbonat |

und mahlt das Gemisch einmal mittels einer Gebläsemühle auf einem 0,5-mm-Dreiecksieb auf eine Feinheit von unter 44 Mikron.

c) Isoproturon-Trifluralin 20 : 20-Spritzpulver

Zur Herstellung des Spritzpulvers mischt man 550 kg Trifluralin-Konzentrat (hergestellt gemäß a)) mit 450 kg Isoproturon-Konzentrat (hergestellt gemäß b)) und mahlt diese Mischung auf einer Schlagkreuzmühle bei ca. 80 m/sec äußere Umfangsgeschwindigkeit des Mahlkreuzes durch ein 0,5-mm-Lochsieb.

Das resultierende Spritzpulver-Endprodukt besitzt eine Feinheit nach Siebung von max. 1 Gew.-% Rückstand an Pulver auf einem 44-Mikronsieb und einer Suspendierbarkeit von 80% nach 30 Minuten Stehen in Wasser von 30°C und 342 ppm Standard hartem Wasser.

Die Zusammensetzung des Spritzpulvers ist:

| | | |
|---|---|---|
| 21,00 | Gew.-% | Trifluralin techn. 95%ig = 20 Gew.-% Reintrifluralin |
| 20,25 | Gew.-% | Isoproturon techn. 99%ig = 20 Gew.-% Isoproturon-Reinwirkstoff |
| 40,70 | Gew.-% | feindisperse synthetische Kieselsäure (Wessalon S) |
| 11,35 | Gew.-% | Kondensationsprodukt aus Alkylnaphthalinsulfonsäure mit Kresolen, Natriumsulfit und Formaldehyd (Dispergiermittel SS, Hoechst AG) |
| 5,21 | Gew.-% | alkylphthalinsulfonsaures Natrium (®Leonil DB) |
| 0,14 | Gew.-% | Seifenflocken |
| 1,35 | Gew.-% | Natriumcarbonat |

### Beispiel 2

Eine Tankmischung wird erhalten, indem man in praxisüblicher Weise ein handelsübliches Spritzpulver mit 75 Gew.-% Isoproturon-Wirkstoff (B) und ein handelsübliches Emulsionskonzentrat mit 48 Gew.-% Trifluralin-Wirkstoff (A) in einem Wirkstoffverhältnis von 1 : 1 mit Wasser ansetzt und zu einer Spritzbrühe verdünnt. Die Aufwandmenge an Spritzbrühe beträgt ca. 100 bis 600 l pro Hektar.

In analoger Weise werden auch Spritzbrühen mit anderen Wirkstoffverhältnissen hergestellt und ausgebracht. Bevorzugt sind Wirkstoffverhältnisse (B : A) von 4 : 1 bis 1 : 4.

## Biologische Beispiele

Bei dem nachfolgenden biologischen Beispiel I werden Gewächshausversuche durchgeführt.

In allen Fällen wird bei den Kombinationen unterschieden zwischen dem errechneten und dem

gefundenen Wirkungsgrad, wobei der errechnete Wirkungsgrad jeweils in Klammern vor dem gefundenen angegeben ist. Der errechnete Wirkungsgrad wird ermittelt nach der Formel von S. R. Colby: Calculation of synergistic and antagonistic responses of herbicide combinations, Weeds 15 (1967) 20–22. Diese Formel lautet:

$$E = X + Y - \frac{X \cdot Y}{100},$$

wobei

X = % Schädigung durch Herbizid A bei x kg/ha Aufwandmenge;
Y = % Schädigung durch Herbizid B bei y kg/ha Aufwandmenge;
E = die zu erwartende Schädigung durch die Herbizide A + B bei x + y kg/ha

Ist die tatsächliche Schädigung aber größer als die rechnerisch zu erwartende, so ist die Wirkung der Kombination mehr als additiv, d. h. es liegt ein synergistischer Wirkungseffekt vor.

## Beispiel I

In einem Gewächshausversuch werden Töpfe mit verschiedenen Unkräutern ausgesät; anschließend werden die Samen sehr flach mit Erde abgedeckt und am selben Tag auch die Verbindungen A und B in den angegebenen Dosierungen sowohl allein, als auch in Kombinationen miteinander auf die Bodenoberfläche gespritzt. 4 Wochen nach der Behandlung wird der Versuch ausgewertet. Das Ergebnis ist in der nachstehenden Tabelle I zusammengefaßt. Es zeigt sich deutlich, daß bei den Kombinationen die Wirkung an einigen Unkrautarten größer ist, als nach der oben angeführten Formel zu erwarten gewesen wäre, d. h., es liegen synergistische Effekte vor.

Tabelle I

Wirkung (= Schädigung in %) der Verbindungen A und B jeweils allein sowie in Kombinationen in den angegebenen Dosierungen (mg AS/Topf) bei Anwendung auf die unter 1) bis 3) genannten Unkräuter. AS = Aktivsubstanz. Die in Klammern angegebenen Werte in % geben außerdem die nach der Formel von Colby aus den Einzelwirkungen der Bestandteile errechnete Schädigungswirkung wieder.

1) an Stellaria media

| | mg AS/Topf | Schädigung in % | | | |
|---|---|---|---|---|---|
| | | Verbindung B (mg AS/Topf) | | | |
| | | 0 | 15 | 30 | 60 |
| Verbindung A | 0 | 0 | 30 | 65 | 80 |
| | 7,5 | 0 | (30) 40 | (65) 75 | (80) 90 |
| | 15 | 0 | (30) 60 | (65) 80 | (80) 95 |
| | 30 | 0 | (30) 80 | (65) 95 | (80) 100 |

2) an Chenopodium album

| | mg AS/Topf | Schädigung in % Verbindung B (mg AS/Topf) | | |
|---|---|---|---|---|
| | | 0 | 15 | 30 |
| Verbindung A | 0 | 0 | 30 | 75 |
| | 7,5 | 20 | (44) 55 | (80) 85 |
| | 15 | 40 | (58) 75 | (85) 95 |
| | 30 | 60 | (72) 85 | (90) 99 |

3) an Galium aparine

| | mg AS/Topf | Schädigung in % Verbindung B (mg AS/Topf) | | | |
|---|---|---|---|---|---|
| | | 0 | 125 | 250 | 500 |
| Verbindung A | 0 | 0 | 0 | 0 | 20 |
| | 62,0 | 40 | (40) 45 | (40) 60 | (52) 65 |
| | 125 | 60 | (60) 70 | (60) 75 | (68) 80 |
| | 250 | 85 | (85) 90 | (85) 95 | (88) 99 |

**Patentansprüche**

1. Herbizide Mittel, gekennzeichnet durch einen Gehalt an einer Verbindung der Formel A

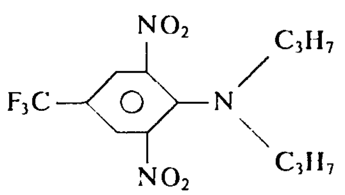

(A)

in Kombination mit einer Verbindung der Formel B

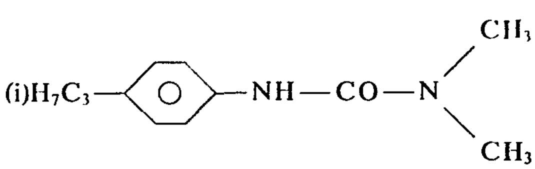

(B)

2. Herbizide Mittel gemäß Anspruch 1, dadurch gekennzeichnet, daß das Mischungsverhältnis der Komponenten A und B 10 : 1 bis 1 : 10 beträgt.

3. Herbizide Mittel gemäß Anspruch 1, dadurch gekennzeichnet, daß das Mischungsverhältnis der Komponenten A und B 4 : 1 bis 1 : 4 beträgt.

4. Verwendung der Mittel gemäß Ansprüchen 1 bis 3, zur Bekämpfung von Schadpflanzen in Nutzpflanzenkulturen, insbesondere in Getreide.

## Claims

1. Herbicidal composition containing as active ingredient a combination of a compound of the formula A

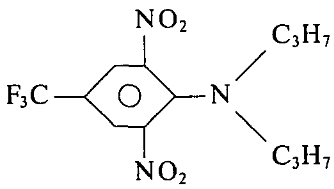

(A)

with a compound of the formula B

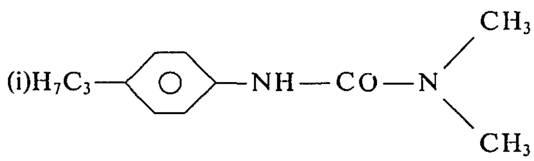

(B)

2. Herbicidal composition as claimed in claim 1, wherein the mixing proportion of compound A to compound B is in the range from 10 : 1 to 1 : 10.
3. Herbicidal composition as claimed in claim 1, wherein the mixing proportion of compound A to compound B is in the range of from 4 : 1 to 1 : 4.
4. Method of using a composition as claimed in claims 1 to 3 for combating noxious plants in crop cultivations, especially in cereals.

## Revendications

1. Produits herbicides caractérisés en ce qu'ils contiennent un composé de formule A:

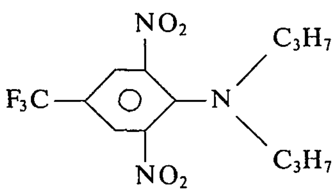

(A)

associé à un composé de formule B:

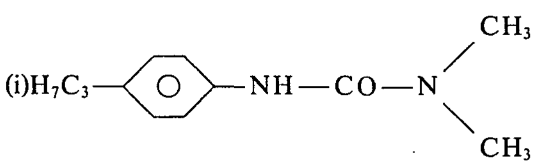

(B)

2. Produits herbicides selon la revendication 1, caractérisés en ce que le rapport entre les quantités des composantes A et B présentes dans le mélange est compris entre 10 : 1 et 1 : 10.
3. Produits herbicides selon la revendication 1, caractérisés en ce que le rapport entre les quantités des composantes A et B présentes dans le mélange est compris entre 4 : 1 et 1 : 4.
4. Application des produits selon l'une quelconque des revendications 1 à 3 à la lutte contre des plantes nuisibles dans des cultures de plantes utiles, plus particulièrement dans les céréales.